# EUROPEAN PATENT APPLICATION

(11) **EP 4 502 943 A1**
(43) Date of publication of application: **05.02.2025**
(21) Application number: 23777831.1
(22) Date of filing: 14.03.2023
(51) Int. Cl.: G06T 7/20, G06T 7/70, G06T 7/11, G06T 3/00, G06F 3/0486

(54) **IMAGE PROCESSING METHOD AND APPARATUS, ELECTRONIC DEVICE, AND STORAGE MEDIUM**

(30) Priority: 28.03.2022 CN 202210316840
(71) Applicant: Beijing Zitiao Network Technology Co., Ltd., Beijing 100190 (CN)
(72) Inventor: LU, Zhixiong, Beijing 100086 (CN); XIE, Yijie, Beijing 100086 (CN)
(74) Representative: Dentons UK and Middle East LLP
(86) International application number: PCT/CN2023/081371
(87) International publication number: WO 2023/185455

(57) **Abstract**

Disclosed in the embodiments of the present disclosure are an image processing method and apparatus, an electronic device and a storage medium, the method comprising: in response to a preset effect trigger operation for triggering a target scene effect, acquiring an effect application image corresponding to the target scene effect, wherein the target scene effect is an effect for transferring a target transfer object; and, in the effect application image, displaying an object initial transfer region and a object transfer target region for transferring the target transfer object, and then, according to a received object transfer trigger operation input on the basis of the object initial transfer region, transferring the target transfer object from the object initial transfer region to the object transfer target region for displaying same.

## Description

The application claims priority to the Chinese patent application No. 202210316840.3, filed on March 28, 2022, the entire disclosure of which is incorporated herein by reference as part of the present application.

### TECHNICAL FIELD

Embodiments of the present disclosure relates to the technical field of image processing, for example, relates to an image processing method, an image processing apparatus, an electronic device and a storage medium.

### BACKGROUND

At present, if users want to make images or videos with creative effects, they can usually only use special production software such as Adobe After Effects to manually post-process the images or videos to generate creative effects.

However, this manual post-processing method requires professional users to constantly interact with the production software, which requires users' professionalism, complicated operation steps and inconvenient use. Moreover, once the image or video changes, it needs to be manually processed again, and the speed of effects display is relatively lagging, which affects the user experience.

### SUMMARY

An embodiment of the disclosure provides an image processing method, an image processing apparatus, an electronic device and a storage medium, so as to realize automatic generation of scene effects and improve the generation efficiency of the scene effects.

In a first aspect, an embodiment of the present disclosure provides an image processing method including:
obtaining an effect application image corresponding to a target scene effect in response to a preset effect trigger operation for triggering the target scene effect, wherein the target scene effect is an effect for transferring a target transfer object;
displaying an object transfer initial region and an object transfer target region for transferring the target transfer object in the effect application image; and
receiving an object transfer trigger operation input based on the object transfer initial region, and transferring the target transfer object from the object transfer initial region to the object transfer target region for display based on the object transfer trigger operation.

In a second aspect, an embodiment of the present disclosure further provides an image processing apparatus including:
an effect application image acquisition module, configured to obtain an effect application image corresponding to a target scene effect in response to a preset effect trigger operation for triggering the target scene effect, wherein the target scene effect is an effect for transferring a target transfer object;
a transfer region display module, configured to display an object transfer initial region and an object transfer target region for transferring the target transfer object in the effect application image; and
a transfer object transfer module, configured to receive an object transfer trigger operation input based on the object transfer initial region, and transfer the target transfer object from the object transfer initial region to the object transfer target region for display based on the object transfer trigger operation.

In a third aspect, an embodiment of the present disclosure further provides an electronic device including:
at least one processor; and
a storage device, configured to store at least one program,
upon the at least one program being executed by the at least one processor, the at least one processor is caused to realize the image processing method provided by any embodiment of the present disclosure.

In the fourth aspect, the embodiment of the present disclosure further provides a computer-readable storage medium, a computer program is stored on the computer-readable storage medium, which, upon the computer program being executed by a processor, the image processing method provided by any embodiment of the present disclosure is realized.

### BRIEF DESCRIPTION OF DRAWINGS

Fig. 1A is a flow chart of an image processing method provided by Embodiment 1 of the present disclosure;
Fig. 1B is a schematic diagram of a target scene effect provided by Embodiment 1 of the present disclosure;
Fig. 1C is a schematic diagram of another target scene effect provided by Embodiment 1 of the present disclosure;
Fig. ID is a schematic diagram of a target scene effect of a three-dimensional image provided by the first embodiment of the present disclosure;
Fig. 2 is a flow chart of an image processing method provided by Embodiment 2 of the present disclosure;
Fig. 3 is a flow chart of an image processing method provided by Embodiment 3 of the present disclosure;
Fig. 4 is a flow chart of an image processing method provided by Embodiment 4 of the present disclosure;
Fig. 5 is a schematic structural diagram of an image processing apparatus provided in Embodiment 5 of the present disclosure;
Fig. 6 is a schematic structural diagram of an electronic device provided in Embodiment 6 of the present disclosure.

### DETAILED DESCRIPTION

Embodiments of the present disclosure are described in more detail below with reference to the drawings.

It should be understood that various steps recorded in the implementation modes of the method of the present disclosure may be performed according to different orders and/or performed in parallel. In addition, the implementation modes of the method may include additional steps and/or steps omitted or unshown. The scope of the present disclosure is not limited in this aspect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units. It should be noted that modifications of "one" and "more" mentioned in the present disclosure are schematic rather than restrictive, and those skilled in the art should understand that unless otherwise explicitly stated in the context, it should be understood as "one or more".

Names of messages or information exchanged among multiple devices in the embodiments of the present disclosure are only used for illustrative purposes, and are not used to limit the scope of these messages or information.

### Embodiment 1

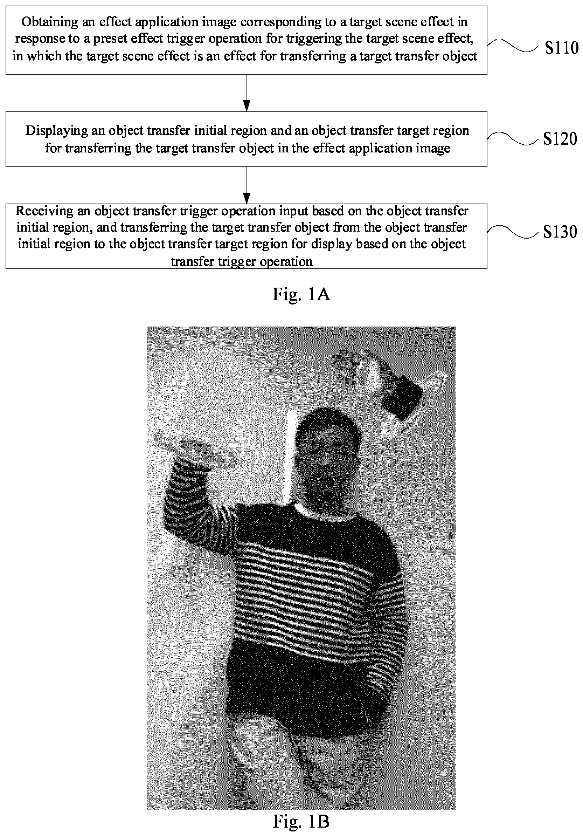

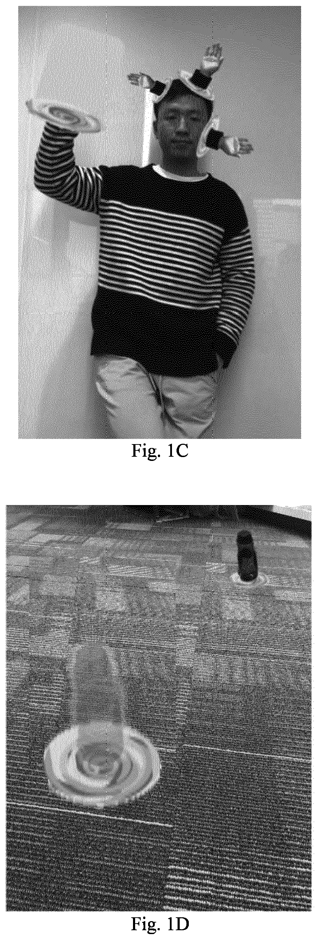

Fig. 1 is a flow chart of an image processing method provided by Embodiment 1 of the present disclosure. This embodiment can be applied to the case of automatically generating an image with a target scene effect according to a currently photographed image, a currently photographed video, a historical image uploaded by the user or a historical video uploaded by the user. This method can be executed by an image processing apparatus which can be realized by software and/or hardware, and can be configured in a terminal and/or a server to realize the image processing method in the embodiment of the present disclosure.

As shown in Fig. 1, the method of this embodiment may include:
S110. Obtaining an effect application image corresponding to a target scene effect in response to a preset effect trigger operation for triggering the target scene effect, in which the target scene effect is an effect for transferring a target transfer object.

The target scene effect may be a scene effect for transferring at least one target transfer object in the image. For example, at least one object displayed in a certain region in the image, or part of the content in an object is transferred to another region in the image for display. For example, the target scene effect may be an object transfer effect at the entrance and the exit, that is, an entrance display region and an exit display region may be set in the image, and the object or part of the content in the object that are located in the entrance display region in the image can be transferred to the exit display region in the image for display.

Of course, the target scene effects are not limited to the above-mentioned object transfer effect at the entrance and the exit. For example, it may also be an effect of object positioning, that is, position replacement, replacing the display position of a specific item, facility or character in the image. For example, if the user wants to change the furniture arrangement position in the live broadcast picture, this method can be used to transfer the furniture in the live broadcast picture to another region for display.

The target transfer object may be an object that needs to be transferred in the effect application image, including but not limited to objects, persons, characters, part of content of an object and part of a person in the effect application image. The target transfer object may be any object in the effect application image, and the target transfer object may also be a prominent object in the effect application image, such as a ship in an image showing a sea and a cup on a table; alternatively, the target transfer object may be a specific object in the effect application image, such as the user's hand or head.

In the embodiment of the present disclosure, the preset effect trigger operation may be an operation performed by a user to trigger the generation of a target scene effect. The trigger operation of preset effects may be an operation of triggering a preset effect generation control, for example, displaying preset effect generation controls corresponding to various scene effects on the user display interface, and detecting whether the user triggers the preset effect generation controls corresponding to the target scene effects. Alternatively, the preset effect trigger operation may also be an operation with a specific execution action, such as double-clicking the display interface, inputting a preset effect trigger trace on the display interface, and the like. Alternatively, the preset effect trigger operation may also be the operation of uploading images or videos by the user.

For example, in this embodiment, an effect application image corresponding to a preset effect trigger operation can be obtained in respond to a user's preset effect trigger operation. The effect application image may be an image currently photographed by the user, or various video frames in the video currently recorded by the user, or a picture in the user's live broadcast, or a historical photographed image uploaded by the user, or various video frames in a historical photographed video uploaded by the user.

Taking the short video recording of effects as an example, the preset effect generation control corresponding to the target scene effect can be displayed on the client used by the user, if it is detected that the user triggers the control, that is, the user performs the preset effect trigger operation, the current video frame in the recording process performed by the user is determined as the effect application image.

It can be understood that if the effect application image is the current video frame in the recording process performed by the user, the current video frame in the recording process performed by the user can be continuously obtained in this embodiment, so as to dynamically generate the target scene effects in the recording process performed by the user.

S120. Displaying an object transfer initial region and an object transfer target region for transferring the target transfer object in the effect application image.

After obtaining the effect application image, in this embodiment, the object transfer initial region and the object transfer target region can be displayed in the effect application image. The object transfer initial region may be an initial region where the target transfer object is located in the effect application image, that is, the region corresponding to the target transfer object before transfer. Alternatively, the object transfer initial region may be an adjacent area of the display region where the target transfer object is located before transfer. The object transfer target region may be a region in the effect application image where the transferred target transfer object needs to be displayed.

The number of object transfer initial regions may be at least one, and the number of object transfer target regions may also be at least one. The corresponding relationship between the object transfer initial region and the object transfer target region may be one-to-one, one-to-many or many-to-one.

For example, upon the number of the object transfer initial region and the number of the object transfer target region being both one, the target scene effect may be transferring the target transfer object from one object transfer initial region to one object transfer target region. As shown in Fig. 1B, a schematic diagram of a target scene effect is shown, in which there are one object transfer initial region and one object transfer target region.

Upon the number of the object transfer initial region being one and the number of the object transfer target regions being multiple, the target scene effect may be transferring the target transfer object from one object transfer initial region to multiple object transfer target regions at the same time. As shown in Fig. 1C, a schematic diagram of another target scene effect is shown, in which there are one object transfer initial region and multiple object transfer target regions.

Upon the number of object transfer initial regions being multiple and the number of object transfer target region being one, the target scene effect may be transferring the various target transfer objects from multiple object transfer initial regions to one object transfer target region at the same time.

Upon the number of the object transfer initial regions being multiple, the number of the object transfer target regions being multiple, and the two being equal, the target scene effect may be transferring the various target transfer objects from multiple object transfer initial regions to multiple object transfer target regions in a one-to-one manner. If the two numbers are not equal, after transferring various target transfer objects from multiple object transfer initial regions to multiple object transfer target regions in a one-to-one manner, one target transfer object may be randomly selected to transfer from one object transfer initial region to multiple object transfer target regions, or, multiple target transfer objects can be randomly selected to transfer from multiple object transfer initial regions to one object transfer target region.

In the embodiment of the present disclosure, information such as region shape, region size, region color and the like of the object transfer initial region and the object transfer target region may be set correspondingly according to the target scene effect. For example, if the target scene effect is an object transfer effect at the entrance and the exit, the object transfer initial region may be a display region simulating the shape of the entrance and the light effect at the entrance, and the object transfer target region may be a display region simulating the shape of the exit shape and the light effect at the exit, such as an oval region with an aperture display effect. For another example, if the target scene effect is an object position replacement effect, the object transfer initial region and the object transfer target region may be display regions with a certain transparency.

It should be noted that in the embodiment of the present disclosure, the effect application image may be a two-dimensional image or a three-dimensional image. Alternatively, upon the effect application image being a three-dimensional image, the object transfer initial region and the object transfer target region may be three-dimensional transfer spaces in the effect application image. For example, the object transfer initial region may be a three-dimensional space containing the target transfer object, and the object transfer target region may be a three-dimensional space displaying the transferred target transfer object.

For example, in this embodiment, fixed positions can be set for the object transfer initial region and the object transfer target region in advance, and the object transfer initial region and the object transfer target region are displayed at the fixed positions in the effect application image. Alternatively, the object transfer initial region and the object transfer target region can also be displayed according to regions selected or set by the user, and so on.

In an alternative embodiment, a prominent object in the effect application image may also be identified, and the object transfer initial region and/or the object transfer target region are displayed based on the position of the prominent objects. For example, a first preset spatial relationship may be satisfied between the position of the prominent object and the object transfer initial region; or, a second preset spatial relationship may be satisfied between the position of the prominent object and the object transfer target region; or, the first preset spatial relationship may be satisfied between the position of the prominent object and the object transfer initial region, and a third preset spatial relationship may be satisfied between the object transfer initial region and the object transfer target region.

For example, the object transfer initial region may be displayed according to the position of the prominent object and the first preset spatial relationship, and the object transfer target region may be displayed according to the preset fixed position. Alternatively, the object transfer initial region is displayed according to the position of the prominent object and the first preset spatial relationship, and the object transfer target region is displayed according to the object transfer initial region and the third preset spatial relationship, etc.

For example, if the effect application image is a two-dimensional image, the first preset spatial relationship may be to cover the prominent object, directly below the prominent object, the right side of the prominent object, and so on. If the effect application image is a three-dimensional image, the first preset spatial relationship may be a plane on which the prominent object is placed, or a space covering the prominent object, etc.

Optionally, the method provided by the embodiment of the present disclosure may further include: receiving a first region adjustment operation for the object transfer initial region, and adjusting the object transfer initial region, or, adjusting the object transfer initial region and the object transfer target region based on the first region adjustment operation; and/ or, receiving a second region adjustment operation for the object transfer target region, and adjusting the object transfer target region, or, adjusting the object transfer initial region and the object transfer target region based on the second region adjustment operation.

The first region adjustment operation or the second region adjustment operation may be an operation that a user triggers a one-key adjustment control. That is, if it is detected that the user triggers the one-key adjustment control corresponding to the object transfer initial region or the one-key adjustment control corresponding to the object transfer target region, it can be determined that the first region adjustment operation or the second region adjustment operation is received.

The first region adjustment operation or the second region adjustment operation may also be an operation of inputting or selecting a parameter by the user; that is, if it is detected that the user inputs or selects an adjustment parameter in the toolbar, it can be determined that the first region adjustment operation or the second region adjustment operation is received.

In the embodiment of the present disclosure, the first region adjustment operation or the second region adjustment operation may also be a manual adjustment operation performed by the user on the display interface of the effect application image. For example, the first region adjustment operation and/or the second region adjustment operation may include at least one selected from the group consisting of a region rotating operation, a region scaling operation, and a region moving operation.

Taking the first region adjustment operation as an example, it can be determined that the first region adjustment operation is received upon the rotating operation of the user performed on the object transfer initial region on the display interface being obtained; alternatively, it can be determined that the first region adjustment operation is received upon the scaling operation of the user performed on the object transfer initial region on the display interface being obtained; alternatively, it may be determined that the first region adjustment operation is received upon the dragging operation (moving operation) of the user performed on the object transfer initial region on the display interface is obtained. In this way, based on the rotating operation, scaling operation or moving operation of the user performed on the display interface, the object transfer initial region or object transfer target region can be adjusted accordingly, which meets the personalized needs of the user and improves the user experience.

In the embodiment of the present disclosure, if the first region adjustment operation of the user is received, the object transfer initial region can be adjusted only according to the first region adjustment operation; alternatively, the object transfer initial region and the object transfer target region can be adjusted simultaneously according to the first region adjustment operation.

Adjusting the object transfer initial region and the object transfer target region based on the first region adjustment operation may be as follows: determining an amount to be adjusted corresponding to the object transfer initial region based on the first region adjustment operation, in which the amount to be adjusted includes at least one selected from the group consisting of a rotating angle, a scaling ratio and a moving distance; and adjusting the object transfer initial region and the object transfer target region based on the amount to be adjusted;

or, determining an amount to be adjusted corresponding to the object transfer target region based on the amount to be adjusted corresponding to the object transfer initial region and the third preset spatial relationship between the object transfer initial region and the object transfer target region; adjusting the object transfer initial region based on the amount to be adjusted corresponding to the object transfer initial region, and adjusting the object transfer target region based on the amount to be adjusted corresponding to the object transfer target region.

In the embodiment of the present disclosure, upon the second region adjustment operation of the user being received, the object transfer target region can be adjusted only according to the second region adjustment operation, or, the object transfer initial region and the object transfer target region can be adjusted simultaneously according to the second region adjustment operation. The object transfer initial region and the object transfer target region are simultaneously adjusted according to the second region adjustment operation, which may include adjusting the object transfer initial region and the object transfer target region based on an amount to be adjusted corresponding to the object transfer target region in the second region adjustment operation, or, may include: adjusting the object transfer target region based on the amount to be adjusted corresponding to the object transfer target region in the second region adjustment operation, and determining an amount to be adjusted corresponding to the object transfer initial region according to the amount to be adjusted corresponding to the object transfer target region, and adjusting the object transfer initial region based on the amount to be adjusted corresponding to the object transfer initial region.

In this alternative embodiment, the automatic adjustment of the object transfer initial region and/or the object transfer target region is realized according to the adjustment operation of the user, which meets the personalized needs of the user and improves the user experience.

It should be noted that the above-mentioned receiving the adjustment operation of the user for the object transfer initial region and/or the object transfer target region may also be performed after the target scene effect is generated, that is, the object transfer initial region, or, the object transfer initial region and the object transfer target region, can be adjusted in real time according to the first region adjustment operation of the user after the target scene effect is generated; and/or, the object transfer target region, or the object transfer initial region and the object transfer target region, may be adjusted according to the second region adjustment operation of the user, and the target scene effect is regenerated according to the adjusted object transfer initial region or the adjusted object transfer target region.

S130. Receiving an object transfer trigger operation input based on the object transfer initial region, and transferring the target transfer object from the object transfer initial region to the object transfer target region for display based on the object transfer trigger operation.

The object transfer trigger operation can be that the target transfer object in the effect application image is input into the object transfer initial region, or the target transfer object is input into a preset core region in the object transfer initial region, or the user triggers a corresponding transfer control.

The trigger operation of object transfer can be determined according to the operation performed by the user on the display interface, or it can be automatically determined according to the target transfer object in the effect application image. For example, if it is detected that the user drags the target transfer object in the effect application image to a middle region of the object transfer initial region, it can be determined that the object transfer trigger operation is received. Alternatively, if it is detected that the target transfer object in the effect application image moves to a middle region of the object transfer initial region, such as the user puts his hand in the middle region of the object transfer initial region during the live broadcast, it can be determined that the object transfer trigger operation is received. Alternatively, if the target transfer object is detected in the object transfer initial region, it can be determined that the object transfer trigger operation is received.

For example, after receiving the object transfer trigger operation, the target transfer object in the effect application image can be transferred from the object transfer initial region to the object transfer target region for display based on the object transfer trigger operation.

The pixel value of the target transfer object in the effect application image can be copied to the object transfer target region, so as to realized transferring the target transfer object from the object transfer initial region to the object transfer target region. Of course, the pixel value of the target transfer object in the object transfer initial region can also be deleted while copying the pixel value of the target transfer object.

Alternatively, if the effect application image is a three-dimensional image, SLAM (Simultaneous Localization and Mapping) method may be used to segment out the target transfer object; and the target transfer object is transferred from the object transfer initial region to the object transfer target region. Segmenting out the target transfer object can be understood as determining the three-dimensional space coordinates of the target transfer object, and segmenting out the target transfer object from the effect application image according to the three-dimensional space coordinates.

It should be noted that transferring the target transfer object from the object transfer initial region to the object transfer target region for display may be to display the target transfer object in the object transfer target region according to initial display information such as the initial display size and initial display color of the target transfer object, or may be to determine the display adjustment information of the target transfer object according to the spatial relationship between the object initial transfer region and the object transfer target region, and display the target transfer object in the object transfer target region based on the initial display information and the display adjustment information.

For example, if the effect application image is a three-dimensional image, and there is a visual depth difference between the object transfer initial region and the object transfer target region, a display size scaling amount of the target transfer object can be determined according to the visual depth difference, so as to enable the transferred target transfer object to more conform to the actual visual effect. For example, when the object transfer initial region is ahead and the object transfer target region is behind, the display size of the target transfer object can be reduced in the process of displaying the transferred target transfer object, so that the display effect of the target transfer object in the three-dimensional image can better conform to the actual visual effect and improve the user experience.

For example, refer to Fig. ID, which shows a schematic diagram of the target scene effect of a three-dimensional image. It can be seen from the figure that the display size of the target transfer object in the object transfer initial region is larger than that in the object transfer target region after being transferred.

In the embodiment of the present disclosure, optionally, upon the size of the object transfer initial region being inconsistent with the size of the object transfer target region, the transferred target transfer object can adaptively cover the entire object transfer target region.

According to the technical scheme of this embodiment, an effect application image corresponding to a target scene effect for triggering transferring the target transfer object is obtained in response to a preset effect trigger operation of the user, an object transfer initial region and an object transfer target region for transferring the target transfer object are displayed in the effect application image, and then the target transfer object is transferred from the object transfer initial region to the object transfer target region for display according to the received object transfer trigger operation which is input based on the object transfer initial region, which realizes the automatic generation of the scene effect of transferring a specific object in an image, and this method can be used to automatically generate an effect of transferring a certain object, which solves the technical problem that images need to be manually processed in a software to generate an effect in related art, improves the generation efficiency of effects, and reduces the complexity of effect generation without manual adjustment by the user.

In addition, compared with the method that the user can only post-process images in the related art, this method can generate the target scene effects in real time based on the images currently photographed by the user, that is, this method can realize the automatic generation of effects in the real-time photographing process of the user.

### Embodiment 2

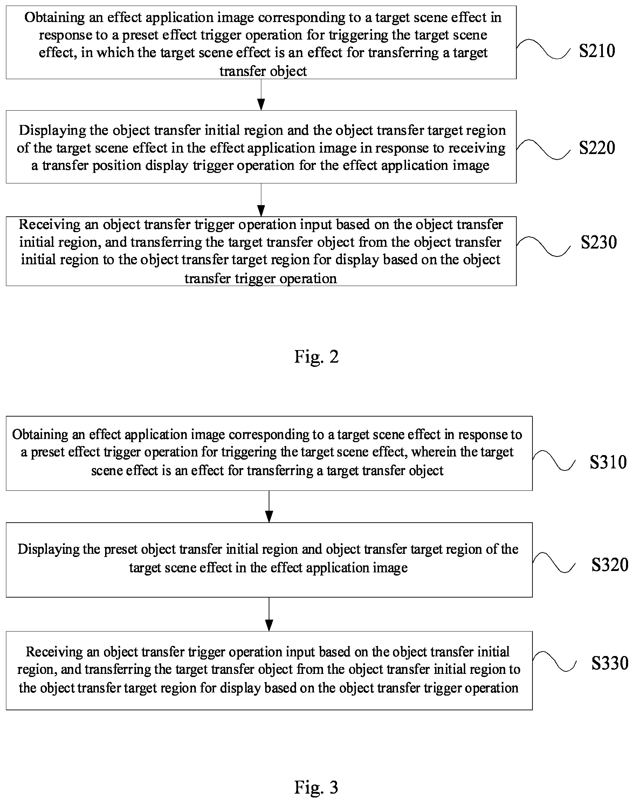

Fig. 2 is a flow chart of the image processing method provided in Embodiment 2 of the present disclosure. In this embodiment, on the basis of any optional technical scheme in the embodiment of the present disclosure, optionally, displaying the object transfer initial region and the object transfer target region of the target scene effect in the effect application image comprises: displaying the object transfer initial region and the object transfer target region of the target scene effect in the effect application image in response to receiving a transfer position display trigger operation for the effect application image.

The explanations of terms that are the same as or corresponding to the above-mentioned embodiments are not repeated here.

As shown in Fig. 2, the method of this embodiment may include:
S210. Obtaining an effect application image corresponding to a target scene effect in response to a preset effect trigger operation for triggering the target scene effect, in which the target scene effect is an effect for transferring a target transfer object.
S220. Displaying the object transfer initial region and the object transfer target region of the target scene effect in the effect application image in response to receiving a transfer position display trigger operation for the effect application image.

The transfer position display trigger operation may be the operation that the user sets the object transfer initial region and/or the object transfer target region. The display trigger operation of the transfer position may be the operation that the user input or select a parameter in a given selection box, or the operation that the user cs a region in the effect application image.

For example, a parameter toolbar for setting the object transfer initial region or a parameter toolbar for setting the object transfer target region may be displayed on the display interface of the effect application image; according to the parameters entered or selected by the user in the parameter toolbar, the display position of the object transfer initial region or the object transfer target region is determined, and the object transfer initial region or the object transfer target region is displayed based on the display position. Of course, it is also possible to detect the user's ticking operation on the display interface of the effect application image, and determine the region ticked by the user as the object transfer initial region or the object transfer target region.

For example, the displaying the object transfer initial region and the object transfer target region of the target scene effect in the effect application image in response to receiving a transfer position display trigger operation for the effect application image includes: displaying the object transfer initial region in the effect application image in response to receiving a first position input operation of the object transfer initial region input for the effect application image; and/ or, displaying the object transfer target region in the effect application image in response to receiving a second position input operation for the object transfer target region input for the effect application image.

The first position input operation includes but is not limited to a parameter input operation, a parameter selection operation or a region ticking operation; the second position input operation includes but is not limited to a parameter input operation, a parameter selection operation or a region ticking operation. It should be noted that in response to only the first position input operation is received, the object transfer target region can be displayed according to the preset fixed position, or according to the third preset spatial relationship between the object transfer target region and the object transfer initial region; accordingly, in response to only the second position input operation is received, the object transfer initial region can be a fixed position or can be determined according to the third preset spatial relationship.

In this exemplary embodiment, the object transfer initial region is displayed by obtaining the first position input operation which is input for the object transfer initial region; and/or, the object transfer target region is displayed by obtaining the second position input operation which is input for the object transfer initial region, so that the flexible display of the object transfer initial region and the object transfer target region can be realized, and the requirements of different users can be met, thereby realizing the generation of the target scene effects meeting the personalized requirements.

Alternatively, the transfer position display trigger operation may also be automatically generated. For example, the transfer position display trigger operation may be automatically generated by the following manner: generating the transfer position display trigger operation if a duration for obtaining the effect application image exceeds a preset duration threshold; or, generating the transfer position display trigger operation if it is determined that a preset effect application subject exists in the effect application image; or, generating the transfer position display trigger operation if it is determined that a preset effect application subject exists in the effect application image and the display duration of the effect application subject in the effect application image exceeds a preset duration; or, generating the transfer position display trigger operation if it is determined that an effect application subject exists in a preset display region in the effect application image; or, generating the transfer position display trigger operation if it is determined that a first preset positional relationship is satisfied between the effect application subject in the effect application image and the preset object transfer initial region; or, generating the transfer position display trigger operation if it is determined that a second preset positional relationship is satisfied between the effect application subject in the effect application image and the preset object transfer target region, and so on.

Of course, the first position input operation and the second position input operation may also be automatically generated. For example, the first position input operation is generated if it is determined that the first preset positional relationship is satisfied between the effect application subject in the effect application image and the preset object transfer initial region; or, the second position input operation is generated if it is determined that the second preset positional relationship is satisfied between the effect application subject in the effect application image and the preset object transfer target region, etc. For the generation of the first position input operation and the second position input operation, please refer to the above examples of above-mentioned the transfer position display trigger operation.

S230. Receiving an object transfer trigger operation input based on the object transfer initial region, and transferring the target transfer object from the object transfer initial region to the object transfer target region for display based on the object transfer trigger operation.

In the technical scheme of this embodiment, the object transfer initial region and the object transfer target region are displayed in the effect application image by the received transfer position display trigger operation for the effect application image, so that the object transfer initial region and the object transfer target region can be displayed according to the user's requirements, thereby realizing the diversified display of the target scene effects, improving the user's experience.

### Embodiment 3

Fig. 3 is a flow chart of the image processing method provided by Embodiment 3 of the present disclosure. Based on any optional technical scheme in the embodiment of the present disclosure, optionally, the displaying an object transfer initial region and an object transfer target region for transferring the target transfer object in the effect application image comprises: displaying a preset object transfer initial region and a preset object transfer target region of the target scene effect in the effect application image.

The explanations of terms that are the same as or corresponding to the above-mentioned embodiments are not repeated here.

As shown in Fig. 3, the method of this embodiment may include:
S310. Obtaining an effect application image corresponding to a target scene effect in response to a preset effect trigger operation for triggering the target scene effect, wherein the target scene effect is an effect for transferring a target transfer object.
S320. Displaying the preset object transfer initial region and object transfer target region of the target scene effect in the effect application image.

In the embodiment of the present disclosure, the display positions of the object transfer initial region and the object transfer target region may be fixed, that is, may be preset for the target scene effect. For example, the display positions of the object transfer initial region and the object transfer target region in the effect application image may be preset, or, the display size, display color or display effect of the object transfer initial region and the object transfer target region in the effect application image may be preset.

For example, the method provided by this embodiment may further include: presetting a display abscissa proportion and a display ordinate proportion of the object transfer initial region and the object transfer target region in the image. For example, the object transfer initial region may be preset to be displayed at a position of 20% abscissa and 30% ordinate in an image, and the object transfer target region may be displayed at a position of 60% abscissa and 30% ordinate in an image. Based on the preset display abscissa proportion and display ordinate proportion, the preset object transfer initial region and object transfer target region of the target scene effect are displayed in the effect application image.

The method provided by this embodiment may further include: presetting proportions of the object transfer initial region and the object transfer target region in the image. For example. The proportion of the object initial transfer region in the image may be preset to 10%, and the proportion of the object transfer target region in the image may be preset to 8%. According to the preset proportions in the image, the display sizes of the object initial transfer region and the object transfer target region can be determined. Therefore, in the embodiment of the present disclosure, based on the preset display abscissa proportion, the preset display ordinate proportion and the proportions of the object transfer initial region and the object transfer target region in the image, the preset object transfer initial region and object transfer target region of the target scene effect can be displayed in the effect application image.

S330. Receiving an object transfer trigger operation input based on the object transfer initial region, and transferring the target transfer object from the object transfer initial region to the object transfer target region for display based on the object transfer trigger operation.

According to the technical scheme of this embodiment, after the effect application image is obtained, the preset object transfer initial region and object transfer target region of the target scene effect can be displayed in the effect application image, and the user does not need to manually configure the object transfer initial region and the object transfer target region, thus reducing the user's operation and improving the generation efficiency of the target scene effect.

### Embodiment 4

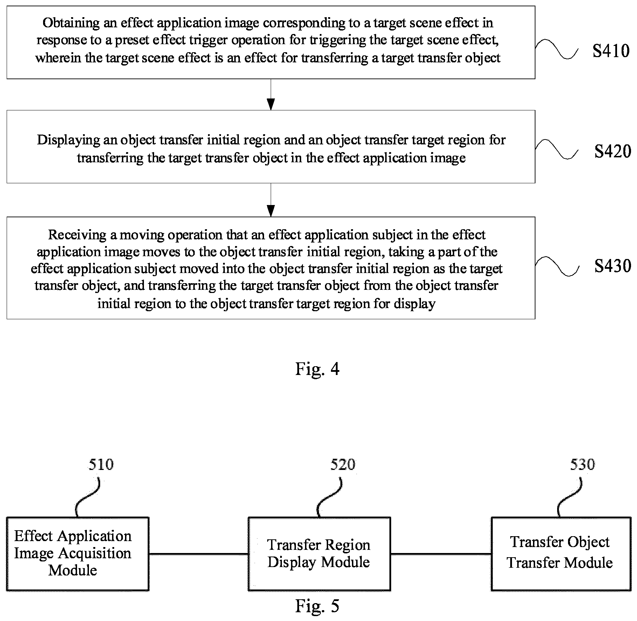

Fig. 4 is a flow chart of the image processing method provided by Embodiment 4 of the present disclosure. In this embodiment, on the basis of any optional technical scheme in the embodiment of the present disclosure, optionally, the receiving an object transfer trigger operation input based on the object transfer initial region, and transferring the target transfer object from the object transfer initial region to the object transfer target region for display based on the object transfer trigger operation includes: receiving a moving operation that an effect application subject in the effect application image moves to the object transfer initial region; taking a part of the effect application subject moved into the object transfer initial region as the target transfer object, and transferring the target transfer object from the object transfer initial region to the object transfer target region for display.

The explanations of terms that are the same as or corresponding to the above-mentioned embodiments are not repeated here.

As shown in Fig. 4, the method of this embodiment may include:
S410. Obtaining an effect application image corresponding to a target scene effect in response to a preset effect trigger operation for triggering the target scene effect, wherein the target scene effect is an effect for transferring a target transfer object.
S420. Displaying an object transfer initial region and an object transfer target region for transferring the target transfer object in the effect application image.
S430. Receiving a moving operation that an effect application subject in the effect application image moves to the object transfer initial region, taking a part of the effect application subject moved into the object transfer initial region as the target transfer object, and transferring the target transfer object from the object transfer initial region to the object transfer target region for display.

The effect application subject may be a transferable object in the effect application image, including but not limited to persons, objects, parts of a person or parts of an object. This embodiment can identify various subjects in the effect application image, and then screen out the effect application subject from the various subjects.

For example, screening out the effect application subject from the various subjects may be realized as the following: selecting a subject closest to the object transfer initial region among the various subjects as the effect application subject; or, taking a subject that meets preset subject characteristics among the various subjects as the effect application subject, for example, a user's hand; or, taking a prominent subject among the various subjects as the effect application subject, for example, a water cup on the ground; or, first, determining a reference subject among the various subjects, and then taking the subject that meets a preset spatial position relationship with the reference subject as the effect application subject, for example, the reference subject is the user's hand, and the effect application subject is the water cup held by the user's hand.

In the embodiment of the present disclosure, the target transfer object can be determined according to a relative position relationship between the various effect application subject and the object transfer initial region in the effect application image. For example, the effect application subject in the object transfer initial region can be taken as the target transfer object.

For example, the moving operation that the effect application subject moves to the object transfer initial region may be received. The moving operation may be a dragging operation performed by the user for controlling the movement of the effect application subject; the moving operation may also be automatically determined according to the movement track of the effect application subject in various effect application images. If the movement track of the effect application subject is that the effect application subject moves to the object transfer initial region, it can be determined that the movement operation is received.

For example, after receiving the moving operation, the part of the effect application subject that is moved to the object transfer initial region may be taken as the target transfer object. It can be understood that the target transfer object may be the entire effect application subject, and it may also be a part of the effect application subject, which can be determined according to the effect application subject contained in the object transfer initial region.

Of course, it is also possible to take a part of the effect application subject that is moved to a preset core region in the object transfer initial region as the target transfer object. For example, the object transfer initial region may be displayed in a form of multiple light circles, an outer light circle may represent the effect at the entrance, and an inner aperture may represent the inside of the entrance, therefore, a part of the effect application subject that is moved into the light circle can be used as the target transfer object.

In an alternative embodiment, the taking a part of the effect application subject moved into the object transfer initial region as the target transfer object comprises: segmenting out the effect application subject moved into the object transfer initial region in the effect application image, and taking the segmented the effect application subject as the target transfer object.

That is, the effect application image can be segmented to segment out the effect application subject in the object transfer initial region and take the segmented effect application subject as the target transfer object. After the target transfer object is segmented out, the target transfer object can be directly moved to the object transfer target region, and the automatic transfer of the target transfer object can be realized without copying the pixel value. Optionally, the entire object transfer initial region may be segmented out, or, only the effect application subject in the object transfer initial region is segmented out.

Through this optional embodiment, the target transfer object can be quickly determined, and the target transfer object obtained based on segmentation is convenient to realize the transfer of the target scene effect, thus improving the generation efficiency of the target scene effect.

Of course, considering that if the effect application subject is directly segmented out, there will be a blank region in the effect application image, therefore, in order to improve the image display effect, the blank region may further be filled.

For example, in one embodiment, after the effect application subject in the effect application image that is moved into the object transfer initial region is segmented out, the method further includes: performing a background completion on a segmented region in the effect application image.

The segmented region may be the region in the object transfer initial region that has been transferred, that is, the initial region where the target transfer object is located. The background completion may be to fill pixel values of the segmented region according to a pixel average value of an adjacent region of the segmented region, so that the pixel values of the segmented region are equal to the pixel average value of the adjacent region thereof.

Of course, it is also possible to directly fill the segmented region in the effect application image based on a preset pixel value. In another embodiment, the segmented region in the effect application image may be filled based on a preset filling object, the preset filling object may be a preset object that is placed in the segmented region, such as mosaics, stick figures corresponding to the target transfer object, and the like.

In the above-mentioned optional embodiment, after the effect application subject moved into the object transfer initial region in the effect application image is segmented, the background completion is performed on the segmented region in the effect application image, so that the blank region in the segmented object transfer initial region is filled, which avoids the blank in the image after generating the target scene effect and improves the generation effect of the target scene effect.

According to the technical scheme of this embodiment, by receiving the moving operation that the effect application subject in the effect application image moves to the object transfer initial region, the part of the effect application subject that is moved to the object transfer initial region is taken as the target transfer object, and the target transfer object is moved from the object transfer initial region to the object transfer target region for display, thus realizing the dynamic and real-time determination of the target transfer object, further realizing the automatic generation of transfer effect for the target transfer object, and improving the generation efficiency of the target scene effect.

### Embodiment 5

Fig. 5 is a schematic structural diagram of an image processing apparatus provided by Embodiment 5 of the present disclosure. The image processing apparatus provided in this embodiment can be realized by a software and/or hardware, and can be configured in a terminal and/or a server to realize the image processing method in this embodiment of the present disclosure. The image processing apparatus may include an effect application image acquisition module 510, a transfer region display module 520, and a transfer object transfer module 530.

The effect application image acquisition module 510 is configured to obtain an effect application image corresponding to a target scene effect in response to a preset effect trigger operation for triggering the target scene effect, the target scene effect is an effect for transferring a target transfer object;
the transfer region display module 520 is configured to display an object transfer initial region and an object transfer target region for transferring the target transfer object in the effect application image;
the transfer object transfer module 530 is configured to receive an object transfer trigger operation input based on the object transfer initial region, and transfer the target transfer object from the object transfer initial region to the object transfer target region for display based on the object transfer trigger operation.

According to the technical scheme of this embodiment, an effect application image corresponding to a target scene effect is obtained in response to a preset effect trigger operation for triggering the target scene effect, an object transfer initial region and an object transfer target region for transferring the target transfer object are displayed in the effect application image, and then the target transfer object is transferred from the object transfer initial region to the object transfer target region for display according to the received object transfer trigger operation which is input based on the object transfer initial region, which realizes the automatic generation of the scene effect of transferring a specific object in an image, and this method can be used to automatically generate an effect of transferring a certain object, thus solving the technical problem of complicated operation steps and slow display speed caused by manually processing the image in software in the related art, and the effect of transferring the object can be displayed in response to the object transfer trigger operation without the user manually adjusting the effect application image, and the effect can be automatically generated, which improves the generation efficiency of the effect, and is not limited by professional users, has universality and simple operation, and improves the user experience.

On the basis of any optional technical scheme in the embodiment of the present disclosure, optionally, the transfer region display module 520 includes a first display unit, and the first display unit is configured to display the object transfer initial region and the object transfer target region of the target scene effect in the effect application image in response to receiving a transfer position display trigger operation for the effect application image.

On the basis of any optional technical scheme in the embodiment of the present disclosure, optionally, the first display unit is configured to:
Displaying the object transfer initial region in the effect application image in response to receiving a first position input operation of the object transfer initial region input for the effect application image; and/ or displaying the object transfer target region in the effect application image in response to receiving a second position input operation for the object transfer target region input for the effect application image.

On the basis of any optional technical scheme in the embodiment of the present disclosure, optionally, the transfer region display module 520 includes a second display unit, and the second display unit is configured to display a preset object transfer initial region and a preset object transfer target region of the target scene effect in the effect application image.

On the basis of any optional technical scheme in the embodiment of the present disclosure, optionally, the transfer object transfer module 530 includes an operation receiving unit and an object transfer unit, the operation receiving unit is configured to receive a moving operation that an effect application subject in the effect application image moves to the object transfer initial region; the object transfer unit is configured to take a part of the effect application subject moved into the object transfer initial region as the target transfer object, and transferring the target transfer object from the object transfer initial region to the object transfer target region for display.

On the basis of any optional technical scheme in the embodiment of the present disclosure, optionally, the object transfer unit is further configured to segment out the effect application subject moved into the object transfer initial region in the effect application image, and take the segmented the effect application subject as the target transfer object.

On the basis of any optional technical scheme in the embodiment of the present disclosure, optionally, the object transfer unit is further configured to perform a background completion on a segmented region in the effect application image after the effect application subject in the effect application image that is moved into the object transfer initial region is segmented out.

On the basis of any optional technical scheme in the embodiment of the present disclosure, optionally, the apparatus further comprises a region adjustment module, the region adjustment module is configured to receive a first region adjustment operation for the object transfer initial region, and adjust the object transfer initial region, or, adjust the object transfer initial region and the object transfer target region based on the first region adjustment operation; and/ or, to receive a second region adjustment operation for the object transfer target region, and adjust the object transfer target region, or, adjust the object transfer initial region and the object transfer target region based on the second region adjustment operation.

On the basis of any optional technical scheme in the embodiment of the present disclosure, optionally, the first region adjustment operation and/or the second region adjustment operation may include at least one selected from the group consisting of a region rotating operation, a region scaling operation, and a region moving operation.

On the basis of any optional technical scheme in the embodiment of the present disclosure, optionally, upon the effect application image being a three-dimensional image, the object transfer initial region and the object transfer target region may be three-dimensional transfer spaces in the effect application image.

The above-mentioned device can execute the method provided by any embodiment of the present disclosure, and has corresponding functional modules for executing the method.

It is worth noting that the various units and modules included in the above device is only divided according to functional logic, but it is not limited to the above division, as long as the corresponding functions can be realized; in addition, the specific names of the various functional units are only for the convenience of distinguishing each other, and are not used to limit the protection scope of the disclosed embodiments.

### Embodiment 6

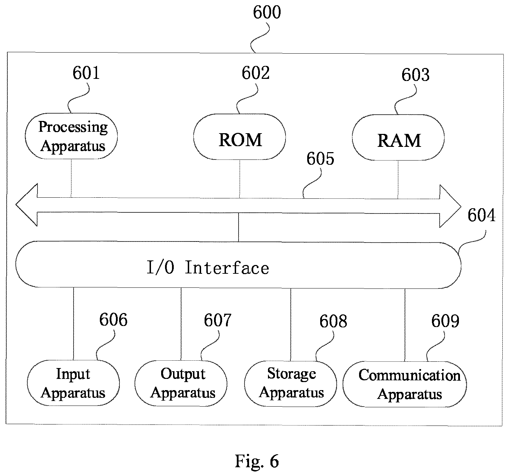

Fig. 6 is a schematic structural diagram of an electronic device provided by embodiment 6 of the present disclosure. Reference is now made to Fig. 6 which shows a structural schematic diagram of an electronic device (e.g., a terminal apparatus or a server in Fig. 6) 600 suitable for implementing the embodiments of the present disclosure. The electronic devices in some embodiments of the present disclosure may include but are not limited to mobile terminals such as a mobile phone, a notebook computer, a digital broadcasting receiver, a PDA (Personal Digital Assistant), a PAD (Portable Android Device), a PMP (Portable Media Player), a vehicle-mounted terminal (e.g., a vehicle-mounted navigation terminal), or the like, and fixed terminals such as a digital TV, a desktop computer, or the like. The electronic device illustrated in FIG. 6 is merely an example, and should not pose any limitation to the functions and the range of use of the embodiments of the present disclosure.

As illustrated in FIG. 6, the electronic device 600 may include a processing apparatus 601 (e.g., a central processing unit, a graphics processing unit, etc.), which can perform various suitable actions and processing according to a program stored in a read-only memory (ROM) 602 or a program loaded from a storage apparatus 608 into a random-access memory (RAM) 603. The RAM 603 further stores various programs and data required for operations of the electronic device 600. The processing apparatus 601, the ROM 602, and the RAM 603 are interconnected by means of a bus 604. An input/output (I/O) interface 604 is also connected to the bus 605.

Usually, the following apparatus may be connected to the I/O interface 604: an input apparatus 606 including, for example, a touch screen, a touch pad, a keyboard, a mouse, a camera, a microphone, an accelerometer, a gyroscope, or the like; an output apparatus 607 including, for example, a liquid crystal display (LCD), a loudspeaker, a vibrator, or the like; a storage apparatus 608 including, for example, a magnetic tape, a hard disk, or the like; and a communication apparatus 609. The communication apparatus 609 may allow the electronic device 600 to be in wireless or wired communication with other devices to exchange data. While FIG. 6 illustrates the electronic device 600 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 509 and installed, or may be installed from the storage apparatus 508, or may be installed from the ROM 502. When the computer program is executed by the processing apparatus 501, the above-mentioned functions defined in the methods of some embodiments of the present disclosure are performed.

Names of messages or information exchanged among multiple devices in the embodiment of the present disclosure are only used for illustrative purposes, and are not used to limit the scope of these messages or information.

The electronic device provided by the embodiment of this disclosure belongs to a same inventive concept as the image processing method provided by the above embodiments, and the technical details not described in detail in the embodiments of this disclosure can be found in the above embodiments.

### Embodiment 7

An embodiment of the present disclosure provides a computer storage medium, a computer program is stored on the computer storage medium, upon the computer program being executed by a processor, the image processing method provided in the above embodiments is realized.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The computer-readable medium carries at least one program, upon the at least one program being executed by the electronic device, the electronic device is caused to:
obtain an effect application image corresponding to a target scene effect in response to a preset effect trigger operation for triggering the target scene effect, wherein the target scene effect is an effect for transferring a target transfer object;
display an object transfer initial region and an object transfer target region for transferring the target transfer object in the effect application image; and
receive an object transfer trigger operation input based on the object transfer initial region, and transferring the target transfer object from the object transfer initial region to the object transfer target region for display based on the object transfer trigger operation.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. The name of the module or unit does not constitute a limitation of the unit itself under certain circumstances. For example, the first acquisition unit may also be described as "the unit that acquires at least two Internet protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

At least one embodiment of the present disclosure, [Example 1] provides an image processing method which includes:
obtaining an effect application image corresponding to a target scene effect in response to a preset effect trigger operation for triggering the target scene effect, wherein the target scene effect is an effect for transferring a target transfer object;
displaying an object transfer initial region and an object transfer target region for transferring the target transfer object in the effect application image; and
receiving an object transfer trigger operation input based on the object transfer initial region, and transferring the target transfer object from the object transfer initial region to the object transfer target region for display based on the object transfer trigger operation.

At least one embodiment of the present disclosure, [Example 2] provides an image processing method which further comprises:
optionally, displaying the object transfer initial region and the object transfer target region of the target scene effect in the effect application image comprises:
displaying the object transfer initial region and the object transfer target region of the target scene effect in the effect application image in response to receiving a transfer position display trigger operation for the effect application image.

At least one embodiment of the present disclosure, [Example 3] provides an image processing method which further comprises:
optionally, the displaying the object transfer initial region and the object transfer target region of the target scene effect in the effect application image in response to receiving a transfer position display trigger operation for the effect application image includes:
displaying the object transfer initial region in the effect application image in response to receiving a first position input operation of the object transfer initial region input for the effect application image;
   and/ or,
displaying the object transfer target region in the effect application image in response to receiving a second position input operation for the object transfer target region input for the effect application image.

At least one embodiment of the present disclosure, [Example 4] provides an image processing method which further comprises:
optionally, the displaying an object transfer initial region and an object transfer target region for transferring the target transfer object in the effect application image comprises:
displaying a preset object transfer initial region and a preset object transfer target region of the target scene effect in the effect application image.

At least one embodiment of the present disclosure, [Example 5] provides an image processing method which further comprises:
optionally, the receiving an object transfer trigger operation input based on the object transfer initial region, and transferring the target transfer object from the object transfer initial region to the object transfer target region for display based on the object transfer trigger operation includes:
receiving a moving operation that an effect application subject in the effect application image moves to the object transfer initial region;
taking a part of the effect application subject moved into the object transfer initial region as the target transfer object, and transferring the target transfer object from the object transfer initial region to the object transfer target region for display.

At least one embodiment of the present disclosure, [Example 6] provides an image processing method which further comprises:
optionally, the taking a part of the effect application subject moved into the object transfer initial region as the target transfer object comprises:
segmenting out the effect application subject moved into the object transfer initial region in the effect application image, and taking the segmented the effect application subject as the target transfer object.

At least one embodiment of the present disclosure, [Example 7] provides an image processing method which further comprises:
optionally, after the effect application subject in the effect application image that is moved into the object transfer initial region is segmented out, the method further includes:
performing a background completion on a segmented region in the effect application image.

At least one embodiment of the present disclosure, [Example 8] provides an image processing method which further comprises:
optionally, further includes:
receiving a first region adjustment operation for the object transfer initial region, and adjusting the object transfer initial region, or, adjusting the object transfer initial region and the object transfer target region based on the first region adjustment operation;
   and/ or,
receiving a second region adjustment operation for the object transfer target region, and adjusting the object transfer target region, or, adjusting the object transfer initial region and the object transfer target region based on the second region adjustment operation.

At least one embodiment of the present disclosure, [Example 9] provides an image processing method which further comprises:
optionally, the first region adjustment operation and/or the second region adjustment operation may include at least one selected from the group consisting of a region rotating operation, a region scaling operation, and a region moving operation.

At least one embodiment of the present disclosure, [Example 10] provides an image processing method which further comprises:
optionally, upon the effect application image being a three-dimensional image, the object transfer initial region and the object transfer target region may be three-dimensional transfer spaces in the effect application image.

At least one embodiment of the present disclosure, [Example 11] provides an image processing apparatus which includes:
an effect application image acquisition module, configured to obtain an effect application image corresponding to a target scene effect in response to a preset effect trigger operation for triggering the target scene effect, wherein the target scene effect is an effect for transferring a target transfer object;
a transfer region display module, configured to display an object transfer initial region and an object transfer target region for transferring the target transfer object in the effect application image; and
a transfer object transfer module, configured to receive an object transfer trigger operation input based on the object transfer initial region, and transfer the target transfer object from the object transfer initial region to the object transfer target region for display based on the object transfer trigger operation.

Furthermore, although the operations are depicted in a particular order, this should not be understood as requiring that these operations be performed in the particular order shown or in a sequential order. Under certain circumstances, multitasking and parallel processing may be beneficial. Likewise, although that above discussion contain specific implementation details, these should not be construe as limiting the scope of the present disclosure. Some features described in the context of separate embodiments can also be combined in a single embodiment. On the contrary, various features described in the context of a single embodiment can also be implemented in multiple embodiments individually or in any suitable sub-combination.

## Claims

1. An image processing method, comprising:
obtaining an effect application image corresponding to a target scene effect in response to a preset effect trigger operation for triggering the target scene effect, wherein the target scene effect is an effect for transferring a target transfer object;
displaying an object transfer initial region and an object transfer target region for transferring the target transfer object in the effect application image; and
receiving an object transfer trigger operation input based on the object transfer initial region, and transferring the target transfer object from the object transfer initial region to the object transfer target region for display based on the object transfer trigger operation.

2. The method according to claim 1, wherein the displaying an object transfer initial region and an object transfer target region for transferring the target transfer object in the effect application image comprises:
displaying the object transfer initial region and the object transfer target region for transferring the target transfer object in the effect application image in response to receiving a transfer position display trigger operation for the effect application image.

3. The method according to claim 2, wherein the displaying the object transfer initial region and the object transfer target region for transferring the target transfer object in the effect application image, in response to receiving a transfer position display trigger operation for the effect application image comprises at least one of following:
displaying the object transfer initial region in the effect application image in response to receiving a first position input operation for the object transfer initial region input for the effect application image; and
displaying the object transfer target region in the effect application image in response to receiving a second position input operation for the object transfer target region input for the effect application image.

4. The method according to claim 1, wherein the displaying an object transfer initial region and an object transfer target region for transferring the target transfer object in the effect application image comprises:
displaying a preset object transfer initial region and a preset object transfer target region for transferring the target transfer object in the effect application image.

5. The method according to claim 1, wherein the receiving an object transfer trigger operation input based on the object transfer initial region, and transferring the target transfer object from the object transfer initial region to the object transfer target region for display based on the object transfer trigger operation comprises:
receiving a moving operation that an effect application subject in the effect application image moves to the object transfer initial region; and
taking a part of the effect application subject moved into the object transfer initial region as the target transfer object, and transferring the target transfer object from the object transfer initial region to the object transfer target region for display.

6. The method according to claim 5, wherein the taking a part of the effect application subject moved into the object transfer initial region as the target transfer object comprises:
segmenting out the effect application subject moved into the object transfer initial region in the effect application image, and taking the segmented the effect application subject as the target transfer object.

7. The method according to claim 6, after the segmenting the effect application subject moved into the object transfer initial region in the effect application image, further comprising:
performing a background completion on a segmented region in the effect application image.

8. The method of claim 1, further comprising at least one of following:
receiving a first region adjustment operation for the object transfer initial region, and adjusting the object transfer initial region, or, adjusting the object transfer initial region and the object transfer target region based on the first region adjustment operation; and
receiving a second region adjustment operation for the object transfer target region, and adjusting the object transfer target region, or, adjusting the object transfer initial region and the object transfer target region based on the second region adjustment operation.

9. The method according to claim 8, wherein the method comprises at least one of following:
the first region adjustment operation comprises at least one of a region rotating operation, a region movement operation and a region moving operation; and
the second region adjustment operation comprises at least one selected from a group consisting of a region rotating operation, a region scaling operation, and a region moving operation.

10. The method according to claim 1, wherein upon the effect application image being a three-dimensional image, the object transfer initial region and the object transfer target region are three-dimensional transfer spaces in the effect application image.

11. An image processing apparatus, comprising:
an effect application image acquisition module, configured to obtain an effect application image corresponding to a target scene effect in response to a preset effect trigger operation for triggering the target scene effect, wherein the target scene effect is an effect for transferring a target transfer object;
a transfer region display module, configured to display an object transfer initial region and an object transfer target region for transferring the target transfer object in the effect application image; and
a transfer object transfer module, configured to receive an object transfer trigger operation input based on the object transfer initial region, and transfer the target transfer object from the object transfer initial region to the object transfer target region for display based on the object transfer trigger operation.

12. An electronic device, comprising:
at least one processor; and
a storage device, configured to store at least one program,
upon the at least one program being executed by the at least one processor, the at least one processor is caused to realize the image processing method according to any one of claims 1 to 10.

13. A computer-readable storage medium, wherein a computer program is stored on the computer-readable storage medium, wherein upon the computer program being executed by a processor, the image processing method according to any one of claims 1-10 is realized.
